# EUROPEAN PATENT APPLICATION

(11) **EP 1 622 129 A2**
(43) Date of publication of application: **01.02.2006**
(21) Application number: 05107003.5
(22) Date of filing: 28.07.2005
(51) Int. Cl.: G11B 5/53, G11B 15/00

(54) **A stator unit**

(30) Priority: 29.07.2004 KR 2004059545
(71) Applicant: Samsung Electronics Co, Ltd, Suwon-si, Gyeonggi-do 442-742 (KR)
(72) Inventor: Kim, Myoung-joon, Suwon-si Gyeonggi-do (KR); Baik, Chung-hum, Yeongtong-gu Suwon-si Gyeonggi-do (KR); Park, Byeng-bae, Gyeonggi-do (KR); Sim, Jae-hoon 102-1008, Dongsuwon LG Village, Gyeonggi-do (KR); Lee, Seung-woo 542-106, Sinnamusil Ssangyong Apt., Gyeonggi-do (KR); Choi, Hyeong-seok 250-1404, Hwanggol-maeul, Suwon-si Gyeonggi-do (KR); Oh, Jeong-hyeob, Dongan-gu, Anyang-si Gyeonggi-do (KR)
(74) Representative: Geary, Stuart Lloyd

(57) **Abstract**

A stator assembly of a motor for a head drum is provided to generate a driving force disposed opposite to a motor rotor. The stator motor includes a double sided flexible printed circuit (FPC) (64). A signal line is formed in a pattern is formed on both sides of the flexible printed circuit (FPC) (64) for inputting an electrical signal. A plurality of wound driving coils are connected to a first side of the flexible printed circuit (FPC) (64) to electrically connect with the signal line. A yoke is connected to a second side of the flexible printed circuit (FPC) (64).

## Description

The present invention relates to a stator unit for use in a head drum comprising a printed circuit having a plurality of coils and signal lines attached to a first side thereof.

Generally, a magnetic recording/playback (or reproducing) apparatus is used to record information on a recording medium such as a magnetic tape or to playback recorded information. Video cassette tape recorders or camcorders are examples of magnetic recording/playback apparatuses.

Typically, magnetic recording/playback apparatuses include a deck, a head drum assembly rotatably installed on the deck to record/playback information to/from a magnetic tape and a tape guide unit to guide the travel of the magnetic tape.

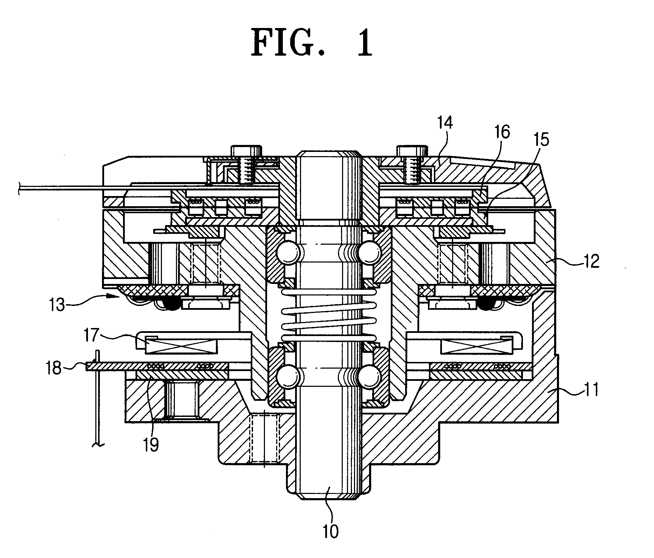

The head drum assembly is inclined at a predetermined angle to the deck. By angularly positioning the head drum assembly the function of the recording/playback apparatus is improved. An example of a known head drum assembly is illustrated in Figure 1.

Referring to Figure 1, a fixed drum 11 is installed on a shaft 10. A rotary drum 12 is rotatably installed on the shaft 10 opposite to the fixed drum 11. A magnetic head 13 is supported in the rotary drum 12. The magnetic head records/plays back information by scanning the travelling magnetic tape. A drum cover 14 is fixed to the shaft 10 on an upper part of the rotary drum 12. A rotating converter 15 (sometimes called a rotary transfer) and a fixed converter 16 (sometimes called a fixed transfer) convert a magnetic signal to an electrical signal for transfer of the information from the magnetic tape. The rotating converter 15 and fixed converter 16 are respectively installed on the side of the rotary drum 12 which faces the drum cover 14.

A motor rotor 17 is installed on the rotary drum 12. A motor stator 18 is installed on the fixed drum 11 opposite the motor rotor 17. The motor rotor 17 uses a varying magnetic field in the motor stator 18 to generate the driving force for rotating the rotary drum 12.

A yoke 19 made of a metallic material is installed in a lower part of the motor stator 18. The yoke 19 is attached to the fixed drum 11 and separately to the motor stator 18. The yoke 19 focuses the magnetic field of the motor stator 18. Thus, the yoke 19 improves current characteristics for rotating the rotary drum 12.

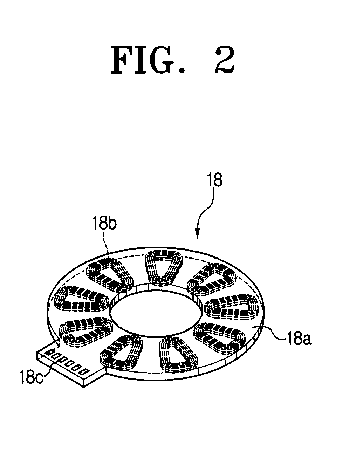

The structure of the motor stator 18 has a fine pattern coil 18b formed on a printed circuit board (PCB) 18a as shown in Figure 2. In other words, the motor stator 18 is provided with nine coils for driving the motor which are formed in a pattern on PCB 18a. A phase generation coil (PGC) which controls the location of the motor and a frequency generation coil (FGC) which controls the speed of the motor are also formed in a pattern on the PCB 18a. The motor stator 18 in the above structure has a predetermined thickness and is installed in the fixed drum 11, separately from the yoke 19. A soldering port 18c is connected to another separate flexible printed circuit (FPC) by soldering. The soldering port 18c is provided on one side of the PCB substrate 18a.

However, in the known motor stator as described above, there are difficulties and disadvantages with the manufacturing process. Specifically, forming a plurality of coils in a pattern is relatively complicated and the manufacturing costs are high.

Another problem is that the assembly process is relatively complex because a separate flexible printed circuit (FPC) has to be soldered to the soldering port 18c.

Accordingly, there is a need for a head drum assembly for a magnetic recording /playback apparatus having a motor stator which reduces manufacturing costs and simplifies the assembly process.

An aspect of the present invention is to solve at least the above problems and/or disadvantages and to provide at least the advantages described below. Accordingly, an aspect of the present invention is to provide an economical motor stator and head drum assembly for a magnetic recording/playback apparatus by adapting the motor stator assembly.

The present invention relates to a stator unit for use in a head drum comprising a printed circuit having a plurality of coils and signal lines attached to a first side thereof.

A stator unit according to the present invention is characterised in that said signal lines are also located on the second side of the printed circuit for connection to a yoke.

Additional preferred and/or advantageous features are set forth in claims 2 to 5 appended hereto.

An embodiment of the present invention will now be described, by way of example only, and with reference to Figures 3 to 6 of the accompanying drawings, in which:
Figure 1 is a sectional view illustrating a head drum assembly of a known magnetic recording/playback apparatus;
Figure 2 is a perspective view illustrating a FP coil of Figure 1;
Figure 3 is a sectional view illustrating a head drum assembly of a magnetic recording/playback apparatus in accordance with an embodiment of the present invention;
Figure 4 is a sectional view illustrating a stator assembly extracted from Figure 3;
Figure 5 is an exploded perspective view illustrating the stator assembly extracted from Figure 3; and
Figure 6 is a bottom view illustrating a bottom of a flexible printed circuit (FPC) of Figure 3.

Throughout the drawings, the same drawing reference numerals will be understood to refer to the same elements, features, and structures.

Descriptions of well-known functions and constructions are omitted for clarity and conciseness.

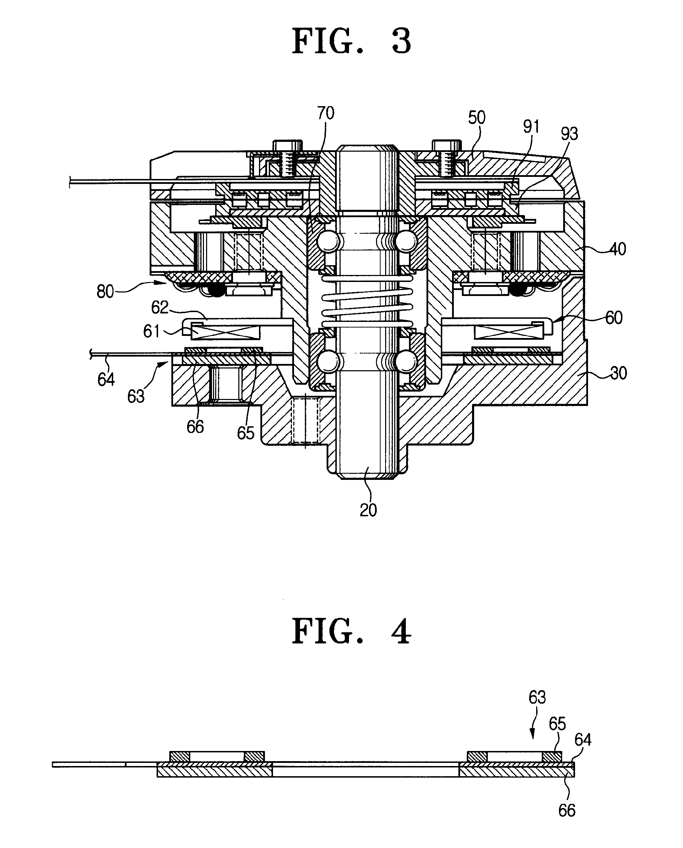

Referring to Figure 3, a head drum assembly of a magnetic recording/playback apparatus in accordance with an embodiment of the present invention comprises a fixed drum 30 fixed to a shaft 20, a rotary drum 40 rotatably installed on an upper part of the fixed drum 30, a drum cover 50 installed on an upper part of the rotary drum 40 and a drum motor 60 to rotate the rotary drum 40.

The fixed drum 30 is fixedly inserted onto the shaft 20. The rotary drum 40 is connected to the shaft 20. A bearing 70 is installed between the rotary drum 40 and the shaft 20.

The rotary drum 40 supports a magnetic head 80. The magnetic head 80 records information onto a magnetic tape or plays back recorded information by scanning a magnetic tape travelling over the magnetic head 80.

The drum cover 50 is located on the rotary drum 40 and the shaft 20 is fixedly inserted on the drum cover 50. The drum cover 50 is provided with a fixed converter 91 and the rotary drum 40 is provided with a rotary converter 93, thereby transferring the information read by the magnetic head 80.

The drum motor 60 includes a rotor 61 installed on the rotary drum 40 and a stator assembly 63 installed on the fixed drum 30.

The rotor 61 is a substantially doughnut-shaped magnet. The rotor 61 is installed on the rotary drum 40 by a rotor case 62.

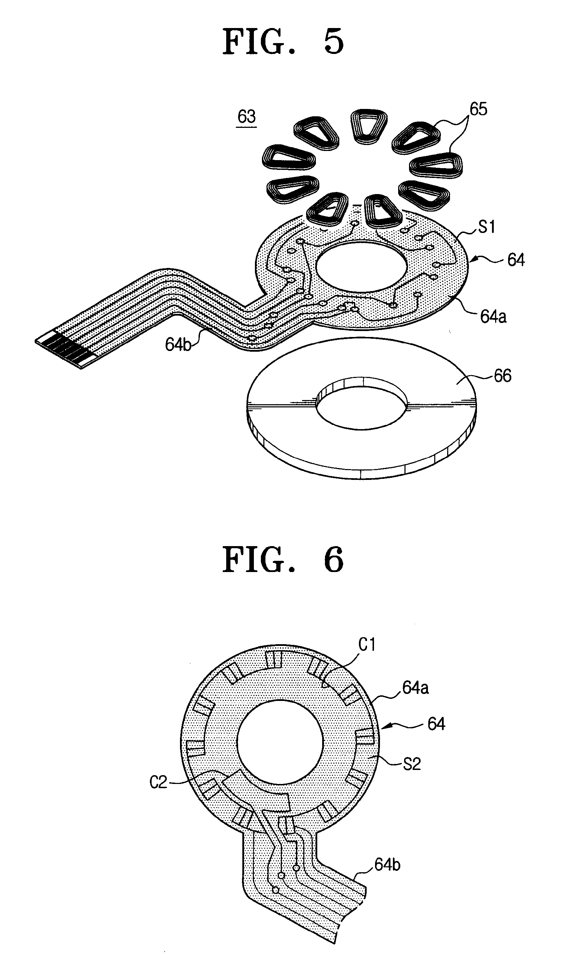

The stator assembly 63 is installed on the fixed drum 20 opposite the rotor 61 separated by a predetermined distance. As shown in Figures 4 and 5, the stator assembly 63 is layered and has a flexible printed circuit (FPC) 64, a driving coil 65 and a yoke 66.

Specifically, the flexible printed circuit (FPC) 64 is double sided. The flexible printed circuit (FPC) has a predetermined signal line formed on each side for an electrical signal. The double sided flexible printed circuit (FPC) 64 includes a substantially doughnut-shaped stator unit 64a to which the driving coil 65 and the yoke 66 are connected. A signal line unit 64b extends from the stator unit 64a by a predetermined distance. On a first side of the double sided flexible printed circuit (FPC) 64, the driving coil 65 is installed for connection with the signal lines by soldering. In the exemplary embodiment of the present invention, nine driving coils 65 are arranged radially about the stator unit 64a. The driving coil 65 is an ordinary coil wound in a substantially oval shape and has a predetermined thickness.

Referring to Figure 6, a second side (S2) of the double sided flexible printed circuit (FPC) 64 includes a FP coil (C1) and a PG coil (C2) formed in a pattern. The FP coil (C1) controls the driving speed of the drum motor 60. The PG coil (C2) controls phase, that is, rotation location of the drum motor 60. The FP coil (C1) and the PG coil (C2) are connected to the signal line. The signal line is connected to the signal line unit 64b so that the electrical signal can be input/output.

The yoke 66 is connected to the second side (S2) of the double sided flexible printed circuit (FPC) 64 by an adhesive. The yoke 66 is substantially doughnut shaped and corresponds to the stator unit 64a. The yoke is preferably made of a material such as metal.

As described in detail above, the stator assembly 60, the driving coil 65 and the yoke 66 are attached to both sides S1, S2 of the double sided flexible printed circuit (FPC) to form a single unit. Likewise, the stator assembly 60 is assembled as one unit with the fixed drum 30. Therefore, it is possible to eliminate the relatively complicated step of assembling the stator on the yoke after fixing the yoke to the fixed drum as is required in the known art.

According to the head drum assembly of the magnetic recording/playback apparatus of the exemplary embodiment of the present invention, it is possible to reduce the unit cost of production by forming the stator assembly of the drum motor as one body by attaching the driving coil and the yoke to the both sides of the flexible printed circuit (FPC).

Furthermore, the installation of the stator assembly and the fixed drum as one body simplifies the assembly process.

## Claims

1. A stator unit (63) for use in a head drum comprising a printed circuit (64) having a plurality of coils (65) and signal lines (64b) attached to a first side (S1) thereof **characterised in that** said signal lines (64b) are also located on the second side (S2) of the printed circuit (64) for connection to a yoke (66).

2. A stator unit (63) according to claim 1, comprising a yoke (66) attached to the second side (S2) of the printed circuit (64) connected to the signal lines located thereon.

3. A stator unit (63) according to either one of claim 1 or 2, wherein said printed circuit (64) is a flexible printed circuit.

4. A head drum for use in a tape deck comprising a stator unit (63) according to any one of claims 1, 2 or 3.

5. A tape deck comprising a head drum according to claim 4,

6. A stator assembly of a motor for a head drum to generate a driving force and arranged opposite to a motor rotor, comprising:
a double sided flexible printed circuit (FPC) having a signal line to input an electrical signal, the signal line being formed in a pattern and arranged on each of side of the double sided flexible printed circuit (FPC);
a plurality of wound driving coils connected to a first side of the flexible printed circuit (FPC) and electrically connected with the signal line; and
a yoke connected to a second side of the flexible printed circuit (FPC).

7. The stator assembly as claimed in claim 6, wherein
the plurality of driving coils are electrically connected with the signal line of the FPC by soldering.

8. The stator assembly as claimed in claim 6, wherein
the yoke is attached to the second side of the FPC by an adhesive.

9. The stator assembly as claimed in claim 6, wherein
the second side of the FPC is provided with a FP coil tor control a driving speed of the motor and a PG coil to control a phase of the motor.

10. The stator assembly as claimed in claim 9, wherein
the FP coil and the PG coil are formed in a pattern on the second side of the FPC, respectively.

11. The stator assembly as claimed in claim 6, wherein
the driving coil is adhered to the first side of the FPC by an adhesive.

12. A head drum assembly of a magnetic recording/reproducing apparatus comprising:
a fixed drum arranged on a shaft;
a rotary drum rotatably installed on the shaft, the rotary drum being located opposite to the fixed drum to support a magnetic head; and
a drum motor to rotatably drive the rotary drum, wherein the drum motor includes a rotor and a stator assembly, the rotor being installed on the rotary drum, and the stator assembly being installed opposite to the rotor on the fixed drum, the stator assembly including a double side flexible printed circuit (FPC) with a first side having to which a plurality of wound driving coils are connected and a second side to which a yoke is connected.

13. The head drum assembly as claimed in claim 12, wherein
the driving coil is adhered to the first side of the flexible printed circuit (FPC) by an adhesive.

14. The head drum assembly as claimed in claim 12, wherein
the first side of the flexible printed circuit (FPC) has a signal line formed in a pattern and being connected with the driving coil by soldering.

15. The head drum assembly as claimed in claim 12, wherein
the second side of the flexible printed circuit (FPC) is provided with a FP coil to control a driving speed of the drum motor and a PG coil to control a phase of the motor.

16. The head drum assembly as claimed in claim 15, wherein
the FP coil and the PG coil are formed in a pattern on the second side of the flexible printed circuit (FPC).

17. The head drum assembly as claimed in claim 12, wherein
the yoke is attached to the second side of the flexible printed circuit (FPC) by an adhesive.

18. The head drum assembly as claimed in claim 12, wherein
the flexible printed circuit (FPC) includes:
a substantially doughnut-shaped stator to support the driving coils, the driving coils having a substantially annular shape; and
a signal line unit extends from one side of the stator unit at a predetermined length, in which the signal line is formed in a pattern.
